# EUROPÄISCHE PATENTSCHRIFT

(11) **EP 2 563 622 B1**
(45) Veröffentlichungstag und Bekanntmachung des Hinweises auf die Patenterteilung: **22.07.2020**
(21) Anmeldenummer: 11717596.8
(22) Anmeldetag: 28.04.2011
(51) Int. Cl.: B60L 50/20, B60L 53/16, B60L 53/31, B60L 53/65, B62M 6/40, H04L 12/40

(54) **MODULARES FAHRZEUGSYSTEM**
MODULAR VEHICLE SYSTEM
SYSTÈME DE VÉHICULE MODULAIRE

(30) Priorität: 30.04.2010 DE 102010028443
(43) Veröffentlichungstag der Anmeldung: 06.03.2013
(73) Patentinhaber: Energybus E.V., 07922 Tanna (DE)
(72) Erfinder: DÖRNDORFER, Johannes, 73525 Schwäbisch Gmünd (DE); FUCHS, Andreas, CH-3011 (CH)
(74) Vertreter: sgb europe
(86) Internationale Anmeldenummer: PCT/EP2011/056764
(87) Internationale Veröffentlichungsnummer: WO 2011/135036

(56) Entgegenhaltungen:
- EP-A1- 1 995 109
- EP-A2- 1 241 061
- EP-A2- 1 454 798
- EP-A2- 1 997 686
- WO-A1-01/23216
- WO-A2-02/23801
- DE-A1-102004 042 004
- DE-A1-102005 011 487
- DE-T2- 69 501 453

## Beschreibung

Die Erfindung betrifft ein modulares Fahrzeugsystem, ein Elektrofahrzeug und ein Modul zur Verbindung mit einem Elektrofahrzeug.

Elektrisch angetriebene Fahrzeuge gewinnen seit geraumer Zeit insbesondere für den Personennahverkehr angesichts steigender Energiekosten und der Forderung nach verringerten Emissionen des Verkehrs zunehmend an Bedeutung. Insbesondere im Bereich der Elektroleichtfahrzeuge, in welchen bspw. Elektrofahrräder, Pedelecs und Roller, aber auch Rollstühle und Quads fallen, sind mittlerweile zahlreiche Fahrzeugtypen kommerziell erhältlich.

Sämtliche derartiger Fahrzeuge weisen einen Elektromotor auf, der zum alleinigen oder unterstützenden Antrieb eingesetzt und über eine oder mehrere Batterien mit elektrischer Energie versorgt wird. Es ist daher notwendig, das elektrische System von Elektrofahrzeugen so auszulegen, dass eine sichere und störungsfreie Leistungsversorgung des Elektromotors gegeben ist.

Angesichts der Tatsache, dass abweichend von bekannten Kraftfahrzeugen mit Verbrennungsmotor die gesamte Antriebsleistung über das elektrische System des Fahrzeugs bereitgestellt werden muss und insofern Stromstärke und/oder Betriebsspannung derartiger Systeme regelmäßig höher als bei bekannten Kraftfahrzeugen liegt, besteht bei Eingriffen in das elektrische System ein relativ hohes Risiko von Beschädigungen, insbesondere auch des Antriebssystems des Fahrzeugs, bspw. wenn eine nicht kompatible Batterie eingebaut oder ein ungeeignetes Ladegerät mit dem Fahrzeug verbunden wird. Zudem kann eine nicht sachgerechte Handhabung im ungünstigsten Fall auch zu Verletzungen des Benutzers führen.

Anders als bei üblichen Kraftfahrzeugen lässt sich ein Eingriff in das elektrische System durch ungeschultes Personal bei Elektrofahrzeugen nicht vollständig vermeiden. Bedingt durch die begrenzte Batteriekapazität und dadurch eingeschränkte Reichweite ist es bspw. erforderlich, dass ein Benutzer ein Ladegerät an das Fahrzeug anschließen oder eine Batterie leicht austauschen kann.

Druckschrift EP 1 995 109 A1 betrifft ein Fahrzeug und eine elektrische Vorrichtung, wie ein Ladegerät. Fahrzeug und Ladegerät verfügen über Steckverbinder, um die Batterie (102) des Fahrzeugs aufzuladen. Das Fahrzeug kann z.B. ein Elektro- oder Hybridfahrzeug sein. Gemäß der Druckschrift ist auf der Seite des Ladegeräts ein Lesegerät für einen Transponderschlüssel des Fahrzeugs angeordnet, so dass der Ladevorgang nach dem Verbinden von Fahrzeug und Ladegerät von einem Besitzer des Fahrzeugs autorisiert werden kann. Der entsprechend auf der Seite des Ladegerätes aus dem Schlüssel "gelesene" ID-Code durch das Ladegerät an das Fahrzeug übermittelt und dort seitens der Wegfahrsperre geprüft. Der Ladevorgang wird dann eingeleitet, wenn die Authentifizierung des Transponderschlüssels im Fahrzeug erfolgreich war.

Druckschrift DE 695 01 453 T2 offenbart ein Kraftfahrzeug mit einem Informationsübertragungssystem, welches stromführende Leitungen verwendet. Zur Einsparung von elektrischer Energie offenbart die Druckschrift eine Ausbildung von einzelnen Funktionsorganen des Informationsübertragungssystems mit einer Datenübertragungsschnittstelle und einem Anwendungsgerät. Hierbei ist mindestens ein Stellglied vorgesehen, um einzelne Anwendungsgeräte entsprechend der von einer Steuerungseinrichtung gesendeten Schaltinformation ein- oder auszuschalten.

Druckschrift EP 1 241 061 A2 betrifft ein Autorisierungsverfahren für die Kommunikation auf einem Datenbus, welches bei der Verbindung mit externen Geräten Anwendung findet. Der Datenbus kann bspw. in einem Fahrzeug angeordnet sein. Die Verbindung des externen Geräts erfolgt drahtlos beispielsweise per Bluetooth. Die Autorisierung erfolgt durch Vergleich von Erkennungsinformation, welche von dem externen Gerät über den Datenbus an ein Autorisierungssystem übertragen wird. Durch Vergleich der empfangenen Erkennungsinformationen mit gespeicherten Erkennungsinformationen ist eine Autorisierung möglich. Das externe Gerät wird dann derart mit dem Datenbus verbunden, dass sämtliche Busteilnehmer mit diesem kommunizieren können.

Druckschrift EP 1 997 686 A2 offenbart eine Vorrichtung zum Übertragen von elektrischer Energie von einem landwirtschaftlichen Arbeitsfahrzeug auf ein an das Arbeitsfahrzeug ankoppelbares Anbaugerät. Um die Regelbarkeit beim Betrieb des Anbaugeräts zu verbessern und den Wirkungsgrad zu erhöhen, wird vorgeschlagen, eine Leistungselektronik vorzusehen, die für die elektrische Last des jeweiligen Anbaugeräts die erforderliche Stromart zur Verfügung stellt.

Es besteht daher die Aufgabe, ein Elektrofahrzeug zu schaffen, welches einen leichten und sicheren Austausch von elektrischen Modulen, insbesondere auch durch einen Fahrzeugbenutzer, ermöglicht.

Die Aufgabe wird gelöst durch ein modulares Fahrzeugsystem nach Anspruch 1, ein Elektro-fahrzeug nach Anspruch 9, ein entsprechendes Modul nach Anspruch 10 und ein Verfahren zur sicheren Verbindung eines Moduls mit einem Elektrofahrzeug nach Anspruch 12. Bevorzugte Ausführungsformen der Erfindung sind in den Unteransprüchen beschrieben.

Ein Kernaspekt der Erfindung ist eine Kommunikation zwischen dem mindestens einen Modul und dem Fahrzeug, bevor eine elektrische Anordnung des Moduls mit dem Bordnetz des Fahrzeugs verbunden wird. Im Rahmen der Kommunikation erfolgt eine Kompatibilitätsprüfung, so dass vorteilhaft sichergestellt ist, dass die elektrische Anordnung des Moduls mit dem Fahrzeug bzw. einem Bordnetz des Fahrzeugs kompatibel ist. Hierdurch wird ein sicherer und störungsfreier Betrieb des Fahrzeugs ermöglicht und Beschädigungen durch Fehlbedienungen vermieden. Ferner wird die Benutzersicherheit vorteilhaft deutlich erhöht.

Im Rahmen der Erfindung wird unter einem Elektrofahrzeug ein ein- oder mehrspuriges elektrisch angetriebenes Fahrzeug und insbesondere ein Straßenfahrzeug verstanden. Bevorzugt ist das Elektrofahrzeug ein Elektroleichtfahrzeug, wie bspw. ein elektrisches Zwei- oder Dreirad, bzw. ein Elektrofahrrad, Pedelec, Roller, Rollstuhl, Quad oder Kart. Insbesondere bevorzugt ist ein Elektroleichtfahrzeug mit einem Leergewicht von nicht mehr als 500 kg, weiter bevorzugt nicht mehr als 350 kg, jeweils ohne Zubehör, wie bspw. Batterien.

Erfindungsgemäß weist das Elektrofahrzeug mindestens ein Leistungsbordnetz zur Energieversorgung einer elektrischen Antriebseinheit und eine oder mehrere mit dem Leistungsbordnetz verbundene Schnittstellen zur Verbindung mindestens eines Moduls auf. Ferner ist eine Steuerungseinrichtung zur Kommunikation mit dem Modul fahrzeugseitig vorgesehen.

Das mindestens eine Modul weist mindestens ein mit der Schnittstelle des Elektrofahrzeugs trennbar verbindbares Anschlusselement, eine elektrische Anordnung und eine Modulsteuerung auf. Fahrzeug und Modul können naturgemäß weitere Komponenten aufweisen, auf die jedoch vorliegend nicht näher eingegangen wird.

Erfindungsgemäß sendet die Modulsteuerung beim Verbinden des Anschlusselementes des Moduls mit der Schnittstelle des Fahrzeugs ein Identifikationssignal an die Steuerungseinrichtung des Fahrzeugs. Die Steuerungseinrichtung empfängt das Identifikationssignal und vergleicht dieses mit mindestens einem Kompatibilitätsparameter. Für den Fall, dass das Identifikationssignal mit dem Parameter übereinstimmt, sendet die Steuerungseinrichtung ein Aktivierungssignal an eine Schalteinheit, um die elektrische Anordnung des Moduls mit dem Leistungsbordnetz des Fahrzeugs zu verbinden.

Erfindungsgemäß wird die elektrische Anordnung des Moduls somit nur dann mit dem Leistungsbordnetz des Fahrzeugs verbunden, wenn die Kompatibilität sichergestellt ist. Für den Fahrzeugbenutzer ergibt sich somit neben der eingangs diskutierten erhöhten Sicherheit auch eine verbesserte Handhabbarkeit, denn eine Prüfung der elektrischen Anforderungen von Fahrzeug und Modul vor dem Verbinden kann vorteilhaft entfallen.

Das Leistungsbordnetz ist hierbei, wie eingangs bemerkt, zur Energieversorgung der elektrischen Antriebseinheit ausgelegt und verbindet mindestens die Antriebseinheit mit der mindestens einen Schnittstelle. Das Leistungsbordnetz kann naturgemäß grundsätzlich weitere elektrische Komponenten oder Baugruppen des Fahrzeugs verbinden, wie bspw. eine oder mehrere interne Batterien, Generatoren, Brennstoffzellen, DC/DC-Wandler, Motoren oder anderweitige Komponenten.

Aufgrund der Anforderung hinsichtlich einer Energieversorgung der elektrischen Antriebseinheit ist das Leistungsbordnetz bevorzugt für einen elektrischen Strom von mindestens 3A, insbesondere mindestens 5A bei einer Spannung von 10V - 100V, insbesondere 24V - 60V ausgelegt. Besonders bevorzugt ist das Leistungsbordnetz ein Gleichstromleistungsnetz, insbesondere bevorzugt ein 42V DC Leistungsnetz.

Je nach Ausgestaltung und Typ des Fahrzeugs kann neben dem Leistungsbordnetz bevorzugt ein separates Hilfsbordnetz vorgesehen sein, welches weitere elektrische Baugruppen, wie Steuerungen, Armaturen, Bedienelemente und/oder Beleuchtungseinrichtungen mit elektrischer Energie versorgt. Insbesondere bevorzugt ist das Hilfsbordnetz für eine Spannung von 12V bzw. 14V ausgelegt. Das Hilfsbordnetz kann eine eigene Spannungsversorgung, bspw. eine Batterie, aufweisen, oder bspw. mittels eines Konverters aus dem Leistungsbordnetz versorgt sein.

Im Rahmen der vorliegenden Erfindung wird unter einer Batterie naturgemäß eine wiederaufladbare Batterie verstanden, wie bspw. ein oder mehrere Akkumulatoren.

Die elektrische Antriebseinheit dient der Umwandlung von elektrischer Energie in mechanische Arbeit und kann bspw. einen oder mehrere Elektromotoren aufweisen. Hierbei ist die elektrische Antriebseinheit bevorzugt als Hauptantrieb eingesetzt; alternativ oder ergänzend ist es jedoch ebenfalls denkbar, dass die elektrische Antriebseinheit zum unterstützenden Antrieb, bspw. bei Elektrofahrrädern unterstützend zu einem Tretantrieb, eingesetzt ist.

Die elektrische Antriebseinheit kann als ein Direktantrieb ausgebildet sein, d.h. als Antrieb ohne Getriebe, was hinsichtlich der Energieeffizienz vorteilhaft ist. Bei einem Elektroleichtfahrzeug ist die elektrische Antriebseinheit bevorzugt ein Scheibenläufermotor. Insbesondere bevorzugt ist die Antriebseinheit ein Getriebemotor. Je nach Ausgestaltung der Antriebseinheit ist eine Motorsteuerung vorgesehen, die zur Regelung der Antriebsleistung ausgebildet ist, bspw. mittels Strom- und/oder Spannungsregelung und/oder Pulsweitenmodulation (PWM).

Die mindestens eine Schnittstelle des Fahrzeugs ist zur Verbindung mit dem Anschlusselement des Moduls ausgebildet. Schnittstelle und Anschlusselement können hierbei sämtliche geeignete Ausgestaltungen aufweisen, die eine sichere elektrische Verbindung zwischen Modul und Leistungsbordnetz bereitstellen. Naturgemäß sollten Schnittstelle und Anschlusselement entsprechend mechanisch aneinander angepasst ausgebildet sein. Bevorzugt sind Schnittstelle und Anschlusselement als Steckverbinder ausgebildet, um die Bedienbarkeit weiter zu verbessern und ein leichtes Verbinden von Modulen mit dem Fahrzeug zu ermöglichen.

Angesichts der eingangs diskutierten Bedienung durch Fahrzeugbenutzer sollten sämtliche stromführenden Teile geeignet berührungsgeschützt ausgeführt sein, entsprechend auch Schnittstelle und Anschlusselement.

Das elektrische Modul weist neben der Schnittstelle ferner eine elektrische Anordnung auf, wie bereits erwähnt. Die elektrische Anordnung ist zur Verbindung mit dem Leistungsbordnetz ausgelegt und kann sämtliche geeignete Ausgestaltungen aufweisen und insbesondere ein oder mehrere elektrische bzw. elektronische Bauteile und/oder Schaltungen umfassen.

Zweckmäßig ist die elektrische Anordnung eine Leistungsanordnung. Der Begriff der Leistungsanordnung umfasst im Rahmen der vorliegenden Erfindung sämtliche elektrische Schaltungsanordnungen und Bauteile, die zur Verbindung mit dem Leistungsbordnetz bzw. der Antriebseinheit und insbesondere zur Zufuhr von elektrischer Energie für die Antriebseinheit bzw. zum Abführen von seitens der Antriebseinheit erzeugter elektrischer Energie ausgebildet sind. Letzteres kann insbesondere dann der Fall sein, wenn die Antriebseinheit als Rekuperationsbremse oder als Generator eingesetzt ist. Bevorzugt ist die Leistungsanordnung für die Zufuhr bzw. zum Abführen eines elektrischen Stroms von mindestens 1A, besonders bevorzugt mindestens 5A ausgelegt.

Zweckmäßig ist die elektrische Anordnung eine Spannungs- bzw. Stromquelle, d.h. eine Energiequelle und weist bspw. eine Batterie, ein Ladegerät, ein Solarpanel, eine Brennstoffzelle und/oder einen Generator auf. Alternativ oder ergänzend kann die elektrische Anordnung auch als elektrischer Verbraucher, d.h. als Energiesenke ausgebildet sein und bspw. einen Bremswiderstand, eine Batterie im Ladebetrieb, einen Konverter oder eine Leistungseinspeisung für das Stromnetz ggf. mit Wechselrichter für eine "Vehicle-to-Grid"-Kopplung aufweisen.

Die erfindungsgemäß vorgesehene Schalteinheit sorgt für eine schaltbare, trennbare Verbindung der elektrischen Anordnung des Moduls mit dem Leistungsbordnetz. Grundsätzlich sollte die Schalteinheit derart ausgebildet sein, dass vor der Aktivierung der Schalteinheit durch die Steuerungseinrichtung die elektrische Anordnung sicher vom Leistungsbordnetz getrennt ist, somit auch in dem Zeitraum zwischen dem Verbinden des Anschlusselements mit der Schnittstelle und der Aktivierung der Schalteinheit durch die Steuerungseinrichtung.

Zur Betätigung der Schalteinheit ist diese mit der Steuerungseinrichtung zum Empfang des Aktivierungssignals geeignet verbunden, wobei naturgemäß neben einer direkten Verbindung auch eine indirekte Verbindung, bspw. über weitere Komponenten des Fahrzeugs, möglich ist. Das Aktivierungssignal kann hierbei ein entsprechend geeignetes, bevorzugt elektrisches Signal sein; besonders bevorzugt ist das Aktivierungssignal ein digitales Signal.

Die Schalteinheit kann zum ein- oder mehrpoligen Schalten der Verbindung zwischen elektrischer Anordnung und Leistungsbordnetz ausgebildet sein, solange sichergestellt ist, dass vor der Aktivierung durch die Steuerungseinrichtung kein nennenswerter elektrischer Strom zwischen der Anordnung und dem Leistungsbordnetz fließt. Bevorzugt ist die Schalteinheit zum allpoligen Schalten der Verbindung zwischen elektrischer Anordnung und Leistungsbordnetz ausgebildet, was die Betriebssicherheit weiter vorteilhaft erhöht. Die Schalteinheit kann diskret, bspw. als Relais oder Schütz, als auch als integrierter Schaltkreis, bspw. als MOSFET, ausgebildet sein.

Die Schalteinheit kann hierbei ein- oder mehrteilig ausgebildet und grundsätzlich im Fahrzeug angeordnet sein, was hinsichtlich Gewicht und Baugröße des Moduls vorteilhaft ist. Bevorzugt ist jedoch die Schalteinheit in dem mindestens einen Modul vorgesehen. Hierdurch kann das Leistungsbordnetz in einfacher Weise durch Hinzufügung weiterer Schnittstellen erweitert werden, ähnlich eines Bussystems.

Wie eingangs diskutiert, ist gemäß der Erfindung die Steuerungseinrichtung zur Kommunikation mit dem mindestens einen Modul ausgelegt. Die Steuerungseinrichtung kann hierzu insbesondere ein oder mehrere Mikroprozessoren oder eine entsprechend eingerichtete Computereinheit mit einer entsprechenden, in einem Speicher abgelegten Programmierung aufweisen.

Die Steuerungseinrichtung kann ein- oder mehrteilig ausgebildet sein, wobei eine zentrale Steuerungseinrichtung bevorzugt ist. Die Steuerungseinrichtung kann auch mit weiteren Komponenten des Fahrzeugs integriert ausgebildet sein, bspw. mit einer Motorsteuerung der elektrischen Antriebseinheit. Bevorzugt entspricht die Steuerungseinrichtung einem "Energybus-Controller (EBC)".

Die erfindungsgemäße Modulsteuerung ist so ausgelegt, dass mindestens beim Verbinden des Anschlusselements des Moduls mit der Schnittstelle des Elektrofahrzeugs das Identifikationssignal an die Steuerungseinrichtung gesendet wird.

Die Kommunikation kann bspw. drahtlos mit einem geeigneten Protokoll erfolgen. Steuerungseinheit und Modulsteuerung sollten bei einer drahtlosen Kommunikation entsprechende Empfänger- bzw. Sendeeinheiten aufweisen. Nicht zwingend erforderlich, wenn auch bevorzugt, ist hierbei eine bidirektionale Kommunikation; wobei es grundsätzlich ausreichend ist, wenn die Modulsteuerung das Identifikationssignal an die Steuerungseinrichtung senden kann. So wäre es bspw. möglich, dass die Steuerungseinrichtung ein RFID-Lesegerät aufweist, welches die Modulsteuerung beim oder kurz vor dem Verbinden des Anschlusselements mit der Schnittstelle abfragt. Die Modulsteuerung kann somit aktiv als auch passiv, bspw. als Transponder, ausgebildet sein.

Alternativ zu einer drahtlosen Kommunikation können Steuerungseinrichtung und Modulsteuerung auch zur Kommunikation über eine entsprechende Kommunikationsleitung ausgebildet sein; bspw. wäre es denkbar, dass sowohl Steuerungseinrichtung als auch Modulsteuerung über das Leistungsbordnetz und/oder ein ggf. vorhandenes Hilfsbordnetz miteinander kommunizieren, indem bspw. das Identifikationssignal entsprechend einer "Powerline-Kommunikation" moduliert übertragen wird. Bevorzugt ist das Identifikationssignal ein digitales Signal, was insbesondere hinsichtlich der Zuverlässigkeit vorteilhaft ist.

Das Identifikationssignal ermöglicht der Steuerungseinrichtung einen Vergleich mit dem mindestens einen Kompatibilitätsparameter und somit eine Entscheidung hinsichtlich der Kompatibilität der elektrischen Anordnung des Moduls mit dem Leistungsbordnetz, d.h. ob die Anordnung sicher mit dem Leistungsbordnetz verbunden werden kann.

Im einfachsten Fall erlaubt das Identifikationssignal eine Identifikation des Moduls, so dass, ggf. nach Abfrage einer entsprechenden in der Steuerungseinrichtung vorgesehenen Speichereinheit, eine Prüfung möglich ist, ob das Modul mit dem Leistungsbordnetz und somit mit dem Fahrzeug kompatibel ist. So kann das Identifikationssignal einem Identifikationsparameter, wie bspw. einer Seriennummer und/oder einer Typen-ID, ggf. mit Hersteller-ID, entsprechen. Alternativ oder ergänzend kann das Identifikationssignal einer Funktions-ID hinsichtlich der Funktionalität der elektrischen Komponente entsprechen, wie bspw. "Energiequelle" oder "Energiesenke", bzw. "Batterie", "Ladegerät" oder "Solarpanel".

Der mindestens eine Kompatibilitätsparameter kann bspw. einen oder mehrere Vergleichswerte und/oder einen oder mehrere Schwellenwerte aufweisen. Naturgemäß kann die Steuerungseinrichtung auch zum Vergleich von mehreren Kompatibilitätsparametern ausgebildet sein. Der mindestens eine Kompatibilitätsparameter kann in der Steuerungseinrichtung fest vorgegeben oder bevorzugt aus einer Speichereinheit durch die Steuerungseinheit abgefragt werden. Alternativ oder ergänzend kann eine Messeinheit mit der Steuerungseinheit verbunden sein, um eine elektrische Größe des Leistungsbordnetzes, wie bspw. Spannung oder Stromfluss zu messen und daraus entsprechend einen oder mehrere Kompatibilitätsparameter zu ermitteln.

Erfindungsgemäß ermittelt die Steuerungseinrichtung mindestens einen elektrischen Betriebsparameter der Anordnung aus dem Identifikationssignal und vergleicht den Betriebsparameter mit mindestens einem elektrischen Kompatibilitätsparameter des Leistungsbordnetzes.

Die vorliegende Erfindung ermöglicht eine vorteilhafte Kompatibilitätsprüfung anhand der elektrischen Eigenschaften der zu verbindenden Netze, was die Sicherheit des Systems weiter erhöht. Der elektrische Betriebsparameter der Anordnung und der elektrische Kompatibilitätsparameter des Leistungsbordnetzes kann hierbei jede für den Vergleich geeignete elektrische Größe oder Bereich sein, wie bspw. Spannung, Strom, Leistung und/oder Batteriekapazität.

Naturgemäß kann vorgesehen sein, mehrere elektrische Betriebsparameter der Anordnung mit entsprechen Kompatibilitätsparametern zu vergleichen.

Die Modulsteuerung kann bspw. ausgebildet sein, um den mindestens einen elektrischen Betriebsparameter aus einem modulseitigen Speicher abzufragen und anschließend ein entsprechendes Identifikationssignal an die Steuerungseinheit des Fahrzeugs zu senden. Dies ist insbesondere dann vorteilhaft, wenn der elektrische Betriebsparameter einem Arbeitsbereich der elektrischen Anordnung des Moduls entspricht, bspw. dem zulässigen Spannungsbereich und/oder einem maximal zulässigen Strom der Anordnung.

Alternativ oder ergänzend kann die Modulsteuerung jeweils mindestens eine Messeinheit aufweisen, um den elektrischen Betriebsparameter durch Messung zu ermitteln. Im Falle einer Spannungsquelle, wie einer Batterie, ist es somit möglich, die aktuelle Spannung zu ermitteln und ein entsprechendes Identifikationssignal an die Steuerungseinheit zu senden.

In gleicher Weise kann die Steuerungseinheit, wie eingangs diskutiert, den mindestens einen elektrischen Kompatibilitätsparameter des Leistungsbordnetzes aus der Speichereinheit bzw. einer im Fahrzeug vorgesehenen Messeinheit ermitteln.

Insbesondere bevorzugt weist sowohl die Modulsteuerung mindestens eine Messeinheit zur Messung der Spannung der elektrischen Anordnung als auch die Steuerungseinrichtung eine fahrzeugseitige Messeinheit zur Messung der Spannung des Leistungsbordnetzes auf. Zweckmäßig kann die Modulsteuerung eine zweite Messeinheit aufweisen, um nach der Verbindung mit einer der Schnittstellen zu ermitteln, ob das Leistungsbordnetz überhaupt spannungsversorgt ist.

Gemäß der Erfindung übermittelt die Modulsteuerung das Identifikationssignal, welches mindestens der Spannung der elektrischen Anordnung entspricht. Die Steuerungseinrichtung ermittelt die Spannung der elektrischen Anordnung aus dem Identifikationssignal und vergleicht die Spannung der elektrischen Anordnung mit der Spannung des Leistungsbordnetzes. Die Steuerungseinrichtung sendet in diesem Fall das Aktivierungssignal an die Schalteinheit, wenn die beiden Spannungen nicht wesentlich voneinander abweichen, d.h. bevorzugt um nicht mehr als ± 0,5 V, insbesondere nicht mehr als ± 0,15 V und besonders bevorzugt nicht mehr als ± 0,05 V.

Naturgemäß ist es je nach Anwendung nicht ausgeschlossen, dass das Identifikationssignal mehreren Betriebsparametern und/oder Identifikationsparametern entspricht und die Steuerungseinrichtung zum Vergleich dieser mit entsprechenden Kompatibilitätsparametern ausgebildet ist.

Zweckmäßig ist das Elektrofahrzeug zur Verbindung von zwei oder mehr Modulen ausgebildet. Insbesondere hier ergeben sich durch die Kompatibilitätsprüfung deutliche Vorteile. Naturgemäß sollte das Elektrofahrzeug bevorzugt zwei oder mehr Schnittstellen aufweisen.

Gemäß einer Weiterbildung der Erfindung ist die Schalteinheit zum separaten Verbinden der zwei oder mehr Module mit dem Leistungsbordnetz ausgebildet, so dass im Falle einer Inkompatibilität das entsprechende Modul zwar nicht mit dem Leistungsbordnetz verbunden wird, jedoch eine Verbindung der weiteren Module möglich ist.

Alternativ oder ergänzend kann die Steuerungseinheit im Falle der Verbindung von zwei oder mehr Modulen zweckmäßig eine Prioritätssteuerung aufweisen, um zusätzlich zu der Kompatibilitätsprüfung anhand der Priorität zu ermitteln, ob das jeweilige Modul mit dem Leistungsbordnetz verbunden werden kann. Hierzu kann die Steuerungseinheit bevorzugt ausgebildet sein, um das Identifikationssignal mit einem oder mehreren Prioritätsparametern zu vergleichen, so dass das Aktivierungssignal nur dann an die Schalteinheit gesendet wird, wenn das Identifikationssignal mit dem mindestens einen Prioritätsparameter übereinstimmt.

Bspw. ist es denkbar, im Falle der Verbindung von mehreren Batteriemodulen eine Priorisierung anhand des derzeitigen Leistungsbedarfs der elektrischen Antriebseinheit vorzunehmen. Ebenfalls ist es möglich, eine Priorisierung anhand des Modultyps vorzusehen, so dass bspw. zunächst die Energie eines Solarpaneels zum Antrieb eingesetzt wird und ein Batteriemodul nur dann zugeschaltet wird, wenn das Solarpaneel keine ausreichende elektrische Leistung liefert.

Bevorzugt ist die Schalteinheit zum getrennten Schalten einer Speiseleitung und einer Ladeleitung ausgebildet, die zwischen elektrischer Anordnung des Moduls und dem Leistungsbordnetz vorgesehen sind.

Hierbei dient die Speiseleitung zur Zufuhr von elektrischer Energie in das Leistungsbordnetz und die Ladeleitung zur Entnahme von elektrischer Energie aus dem Leistungsbordnetz. Die vorliegende Weiterbildung ermöglicht eine verbesserte Steuerung durch die Steuerungseinrichtung, bspw. im Falle, dass mehrere Batterien mit dem Leistungsbordnetz verbunden sind, aber ein vorzeitiges Wiederaufladen einzelner Batterien vermieden werden soll. Die Speiseleitung und Ladeleitung können bevorzugt eine oder mehrere Dioden aufweisen, um die Stromrichtung vorzugeben. Insbesondere bevorzugt ist die Schalteinheit hierfür mit mindestens zwei Dioden ausgebildet.

Wie eingangs diskutiert ist die Schalteinheit bevorzugt in dem mindestens einen Modul angeordnet. Im Falle von mehreren Modulen sollte naturgemäß jedes Modul eine entsprechende Schalteinheit aufweisen.

Bevorzugt ist die Schalteinheit integral mit dem Anschlusselement ausgebildet, wodurch eine besonders kompakte Bauform erreicht wird. Besonders bevorzugt ist die Modulsteuerung integral mit dem Anschlusselement und insbesondere integral mit der Schalteinheit ausgebildet. Zweckmäßig ist ein optischer Indikator, wie bspw. eine LED, mit der Schalteinheit zur Anzeige des Verbindungszustands verbunden.

Nach einer Weiterbildung der Erfindung weist das Elektrofahrzeug ein vom Leistungsbordnetz getrenntes Kommunikationsnetz auf, welches die Steuerungseinrichtung mit der mindestens einen Schnittstelle verbindet. Das Kommunikationsnetz dient hierbei der Übermittlung mindestens des Identifikationssignals von der Modulsteuerung, nachdem das Modul mit der Schnittstelle des Fahrzeugs verbunden wurde. Naturgemäß kann das Kommunikationsnetz zur Verbindung weiterer Baugruppen des Fahrzeugs ausgebildet sein, wie bspw. der Schalteinheit, einer Instrumententafel, einer Bedieneinrichtung und/oder einer Motorsteuerung. Das Kommunikationsnetz kann hierbei bspw. elektrische Signalleitungen aufweisen; zweckmäßig ist das Kommunikationsnetz ein optisches Netz, d. h. ein entsprechend mit optischen Signalleitungen und Sender- /Empfängeranordnungen ausgebildetes Übertragungsnetzwerk. Bevorzugt ist das Kommunikationsnetz als Bussystem ausgebildet, insbesondere bevorzugt ist das Kommunikationsnetz ein CAN-Bussystem. Besonders bevorzugt sind Steuerungseinheit und Modulsteuerung zur Kommunikation über das CAN-open Protokoll ausgebildet.

Zweckmäßig ist das Anschlusselement ausgebildet, um die elektrische Anordnung mit dem Leistungsbordnetz und die Modulsteuerung mit dem Kommunikationsnetz zu verbinden. Das Anschlusselement erlaubt folglich die Übertragung von elektrischer Energie für die Antriebseinheit und ebenfalls eine separate Übertragung des Identifikations- bzw. Aktivierungssignals. Hierdurch wird die Benutzerfreundlichkeit vorteilhaft weiter erhöht, da bei der Verbindung des Moduls mit dem Fahrzeug lediglich ein Anschluss hergestellt werden muss.

Besonders bevorzugt ist das Anschlusselement ferner zur Verbindung der Modulsteuerung mit dem ggf. vorgesehenen Hilfsbordnetz ausgebildet, um die Modulsteuerung mit elektrischer Energie zu versorgen. Insbesondere bevorzugt ist das Anschlusselement zur Verbindung eines 42 V Leistungsbordnetzes, eines 12 V Hilfsbordnetzes und eines CAN-Bussystems (CAN high, CAN low) ausgebildet.

Gemäß eines weiteren Aspekts der vorliegenden Erfindung ist ein Verfahren zur sicheren Verbindung eines Moduls mit einem Elektrofahrzeug vorgesehen, wobei das Elektrofahrzeug mindestens ein Leistungsbordnetz zur Energieversorgung einer elektrischen Antriebseinheit und das Modul mindestens eine elektrische Anordnung zur Verbindung mit dem Leistungsbordnetz aufweist. Hierbei ist vor dem Verbinden der elektrischen Anordnung mit dem Leistungsbordnetz vorgesehen, dass das Modul ein Identifikationssignal an das Elektrofahrzeug sendet, das Elektrofahrzeug das Identifikationssignal empfängt und mit mindestens einem Kompatibilitätsparameter vergleicht und falls das Identifikationssignal mit dem Kompatibilitätsparameter übereinstimmt, die elektrische Anordnung mit dem Leistungsbordnetz verbindet.

Die zuvor erläuterte Kompatibilitätsprüfung kann auch im Rahmen eines modularen Ladesystems vorteilhaft eingesetzt werden. Ein weiterer Aspekt der vorliegenden Erfindung betrifft daher ein modulares Ladesystem mit einer Ladeeinheit und mindestens einem Modul.

Die Ladeeinheit weist eine Ladeleitung und eine oder mehrere mit der Ladeleitung verbundene Schnittstellen zur Verbindung mindestens eines aufladbaren Moduls auf. Ferner weist die Ladeeinheit eine Steuerungseinrichtung auf, die zur Kommunikation mit dem mindestens einen Modul ausgelegt ist.

Das mindestens eine aufladbare Modul weist ein mit der Schnittstelle trennbar verbindbares Anschlusselement und eine elektrische Anordnung zur Verbindung mit der Ladeleitung auf. Ferner ist eine Modulsteuerung vorgesehen, wobei die Modulsteuerung ausgebildet ist, um beim Verbinden des Anschlusselements mit der Schnittstelle ein Identifikationssignal an die Steuerungseinrichtung zu senden. Die Steuerungseinrichtung ist ausgebildet, um das Identifikationssignal zu empfangen, mit mindestens einem Kompatibilitätsparameter zu vergleichen und im Falle, dass das Identifikationssignal mit dem Kompatibilitätsparameter übereinstimmt, ein Aktivierungssignal an mindestens eine Schalteinheit zu senden, um die elektrische Anordnung mit der Ladeleitung zu verbinden.

Die Ausgestaltung gemäß dem vorliegenden Aspekt erlaubt daher auch bei der Verbindung eines aufladbaren Moduls mit einer Ladeeinheit eine vorteilhaft erhöhte Betriebssicherheit durch die erfindungsgemäße Kompatibilitätsprüfung.

Die elektrische Anordnung weist bevorzugt einen elektrischen Energiespeicher und insbesondere bevorzugt eine Batterieanordnung auf, wie bspw. einen oder mehrere Akkumulatoren. Zweckmäßig ist das aufladbare Modul daher ein Batteriemodul.

Die Ladeeinheit ist bevorzugt zur Verbindung mit einem Versorgungsnetz ausgelegt, bspw. einem 220v oder 110V Stromversorgungsnetz. Zweckmäßig weist die Ladeeinheit ein Netzteil auf, welches das Versorgungsnetz mit der Ladeleitung verbindet und für eine Anpassung und ggf. Überwachung von Strom und/oder Spannung ausgelegt ist.

Besonders bevorzugt ist die Steuerungseinrichtung weiter zur Überwachung des Ladevorgangs mindestens eines mit der Schnittstelle verbundenen Moduls ausgelegt. Insbesondere bevorzugt sendet die Schalteinheit ein Deaktivierungssignal an die mindestens eine Schalteinheit, um die elektrische Anordnung nach Abschluss des Ladevorgangs von der Ladeleitung zu trennen.

Hinsichtlich der Ausbildung der einzelnen Komponenten der Ladeeinheit und des aufladbaren Moduls wird auf die vorstehende Beschreibung des modularen Fahrzeugsystems Bezug genommen.

Die Erfindung wird nachstehend anhand von Ausführungsbeispielen beschrieben. Es zeigt:
- Fig. 1: ein Ausführungsbeispiel des elektrischen Systems eines Elektrofahrzeugs in einer schematischen Ansicht;
- Fig. 2: ein Ausführungsbeispiel eines Moduls in einer schematischen Ansicht;
- Fig. 3: eine Detailansicht eines Anschlusselements des Moduls gemäß Fig. 2;
- Fig. 4: das Ausführungsbeispiel eines elektrischen Systems gemäß Fig. 1 mit einem verbundenen Modul gemäß Fig. 2,
- Fig. 5: ein Ausführungsbeispiel der Kommunikation beim Verbinden eines Moduls mit einem Elektrofahrzeug in einem schematischen Flussdiagramm,
- Fig. 6: das Ausführungsbeispiel eines elektrischen Systems gemäß Fig. 1 mit zwei verbundenen Modulen,
- Fig. 7: ein zweites Ausführungsbeispiel des elektrischen Systems eines Elektrofahrzeugs in einer schematischen Ansicht und
- Fig. 8: ein Ausführungsbeispiel eines modularen Ladesystems mit einer Ladeeinheit und einem Modul gemäß Fig. 2.

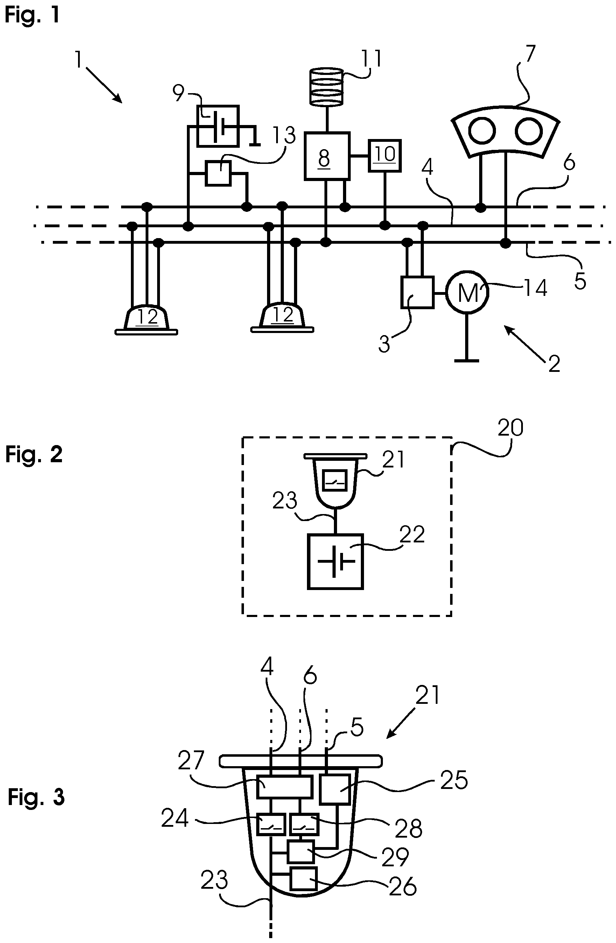

Fig. 1 zeigt das elektrische System 1 eines modularen Elektrofahrzeugs, vorliegend ein Elektrofahrrad, in einer schematischen Ansicht. Zur Übersicht sind hierbei die weiteren, insbesondere mechanischen Bauteile des Elektrofahrrades, wie bspw. Rahmen und Räder, nicht dargestellt.

Wie sich Fig. 1 entnehmen lässt, weist das elektrische System 1 insgesamt drei Bordnetzsysteme auf, nämlich ein Leistungsbordnetz 4, ein CAN-Bussystem 5 und ein Hilfsbordnetz 6. Das Leistungsbordnetz 4 dient hierbei vorwiegend der elektrischen Energieversorgung einer elektrischen Antriebseinheit 2 des Fahrzeugs. Das Leistungsbordnetz 4 ist als Gleichstromnetz mit einer Betriebsspannung von 42 V DC für einen Strom von ca. 20 A - 100 A ausgelegt. Das Leistungsbordnetz 4 wird von einer internen, wiederaufladbaren Fahrzeugbatterie 9 mit elektrischer Energie versorgt.

Das Hilfsbordnetz 6 ist für eine Betriebsspannung von 12 V Gleichstrom ausgelegt und dient der Energieversorgung weiterer Fahrzeugkomponenten, wie bspw. einer Bedieneinheit 7 und einer Steuerungseinrichtung 8. Hierbei wird das Hilfsbordnetz 6 über die Batterie 9 und einen zwischengeschalteten 42V/12V Konverter 13 mit elektrischer Energie versorgt.

Das CAN-Bussystem 5 dient der Steuerung und der Kommunikation der Fahrzeugkomponenten, wie nachfolgend detailliert erläutert. Das CAN-Bussystem 5 ist vorliegend mit elektrischen Signalleitungen ausgebildet; das Kommunikationsprotokoll entspricht dem "CAN-open"-Protokoll gemäß Spezifikation CiA 454 (LEV).

Die elektrische Antriebseinheit 2 umfasst einen Elektromotor 14, welcher über eine Motorsteuerung 3 mit dem Leistungsbordnetz 4 verbunden ist. Die Motorsteuerung 3 ist zum Empfang von Steuerungsbefehlen ferner mit dem CAN-Bus 5 verbunden und moduliert die dem Motor zugeführte Spannung aus dem Leistungsbordnetz 5 mittels einer Pulsweitenmodulation (PWM), um eine Regelung der Antriebsleistung zu ermöglichen.

Zur Steuerung des Elektrofahrzeugs ist die bereits erwähnte zentrale Steuerungseinrichtung 8 vorgesehen, die entsprechend mit dem CAN-Bus 5 und zur Spannungsversorgung ferner mit dem Hilfsbordnetz 6 verbunden ist. Die Steuerungseinrichtung 8 ist eine Mikroprozessorsteuerung, welche über ein in einer verbundenen und variablen Speichereinheit 11 abgelegtes Programm gesteuert wird. Hierbei dient die Steuerungseinheit 8 bspw. dazu, die Motorsteuerung 3 für den Fahrbetrieb entsprechend eines über die Bedieneinheit 7 eingegebenen Steuerungsbefehls des Fahrzeugbenutzers anzusteuern.

Die Steuerungseinheit 8 überwacht ferner das Leistungsbordnetz 4 und ist hierzu mit einer Messeinheit 10 verbunden, welche Spannung und Strom auf dem Leistungsbordnetz erfasst und entsprechende digitale Messwerte an die Steuerungseinrichtung 8 liefert. Die Speichereinheit 11 weist Kompatibilitätsparameter in einer Datenbank auf, was nachfolgend im Detail erläutert ist.

Das elektrische System 1 des Elektrofahrzeuges weist ferner zwei Schnittstellen 12 auf, die als Steckverbinder zur Verbindung mit entsprechenden Modulen 20 ausgebildet sind und das Leistungsbordnetz 4, das Hilfsbordnetz 6 und das Kommunikationsnetz 5 entsprechend mit an den Schnittstellen 12 angeschlossenen Modulen 20 trennbar verbindet.

Das elektrische System 1 des Elektrofahrzeugs und insbesondere die Bordnetze 4, 5 und 6 können naturgemäß weitere Baugruppen und Komponenten aufweisen bzw. verbinden, wie durch die gestrichelten Linien angedeutet.

Ein Ausführungsbeispiel eines zur Verbindung mit einer Schnittstelle 12 vorgesehenen Moduls 20 ist in einer schematischen Ansicht in Fig. 2 gezeigt. Das Modul 20 weist ein Anschlusselement 21 auf, welches ebenfalls als Steckverbinder zum Eingriff mit einer der Schnittstellen 12 ausgebildet ist.

Das Modul 20 weist ferner eine elektrische Anordnung, nämlich eine 42V-Batterie 22 auf, welche zur Zufuhr von elektrischer Energie in das Leistungsbordnetz 4 über eine Versorgungsleitung 23 mit dem Anschlusselement 21 verbunden ist.

Eine Detailansicht des Anschlusselements 21 in Fig. 3 gezeigt. Das Anschlusselement 21 weist insgesamt drei Kontaktelemente auf, um das Modul 20 mit dem Leistungsbordnetz 4, dem CAN-Bussystem 5 und dem Hilfsbordnetz 6 zu verbinden.

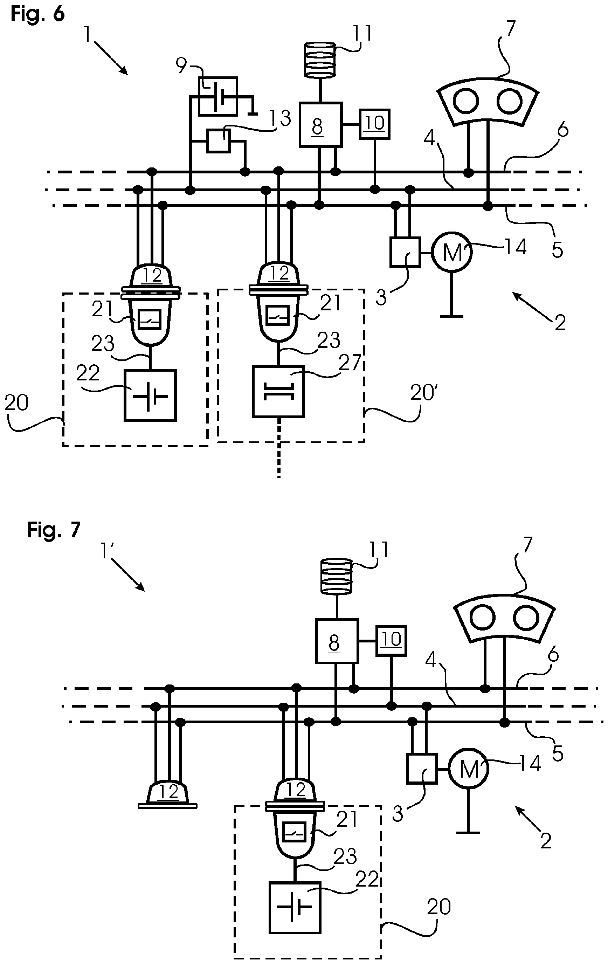

Das Anschlusselement 21 ist integriert mit einer ersten Schalteinheit 24 ausgebildet, mit der die Verbindung zwischen der Versorgungsleitung 23 und folglich der Batterie 22 mit dem Leistungsbordnetz 4 geschaltet werden kann. Zusätzlich verbindet die Schalteinheit 28 einen 42V/12V Konverter 29 schaltbar mit dem Hilfsbordnetz 6, um bspw. im Störungsfall das elektrische Hilfsbordnetz 6 des Fahrzeugs mit elektrischer Energie zu versorgen, wie im Nachfolgenden mit Bezug auf Fig. 7 im Detail erläutert. Die Schalteinheiten 24 und 28 sind vorliegend mit MOSFET-Schaltern ausgebildet und werden über eine Mikroprozessor-Modulsteuerung 25 gesteuert, die mit dem CAN-Bussystem 5 verbunden ist. Die Modulsteuerung 25 wird über den Konverter 29 und somit durch die Batterie 22 des Moduls 20 mit elektrischer Energie versorgt.

Ein Messfühler 26 ist vorgesehen, um die Spannung auf der Versorgungsleitung 23 und somit die durch die Batterie 22 bereitgestellte Spannung zu messen und einen entsprechenden Messwert an die Modulsteuerung 25 zu liefern.

Ferner ist eine Überwachungseinheit 27 vorgesehen, welche den maximal zulässigen Strom zwischen Modul 20 und Leistungsbordnetz 4 sowie zwischen Modul 20 und Hilfsbordnetz 6 sowie die maximal zulässigen Spannungen überwacht, so dass bspw. im Falle eines Kurzschlusses die Batterie 22 sicher vom elektrischen System 1 des Fahrzeugs getrennt werden kann. Hierzu übermittelt die Überwachungseinheit 27 regelmäßig entsprechende Messwerte an die Modulsteuerung 25, welche entsprechend die Schalteinheiten 24 und 28 betätigt.

Im vorliegenden Beispiel sollte ein Strom von 100 A zwischen Versorgungsleitung 23 und Leistungsbordnetz 4 bzw. von 20 A zwischen Konverter 29 und Hilfsbordnetz 6 nicht überschritten werden.

Die Überwachungseinheit 27, die Schalteinheiten 24, 28 und der Messfühler 26 sind naturgemäß mit der Modulsteuerung 25 über geeignete Kommunikationsleitungen verbunden (nicht gezeigt).

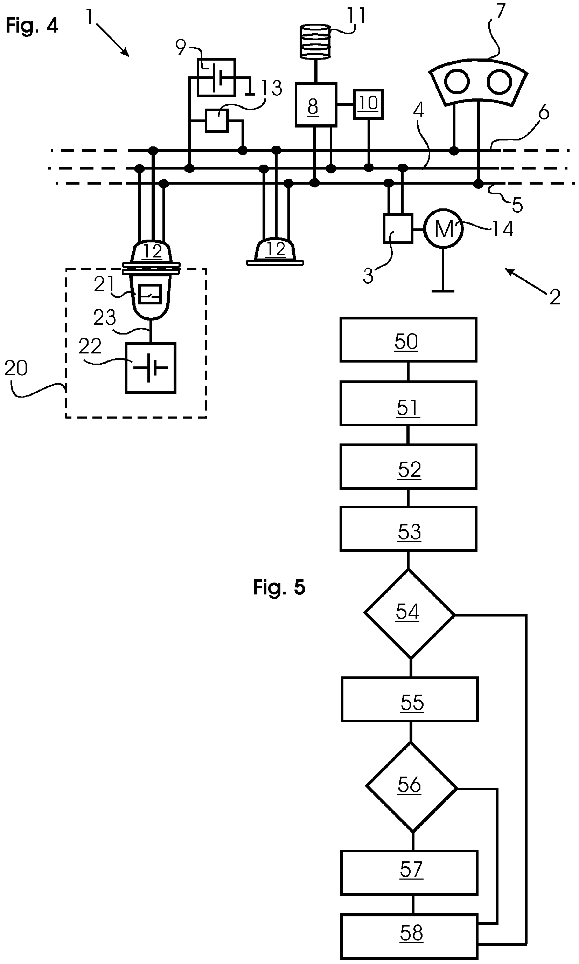

Ein Ausführungsbeispiel des elektrischen Systems 1 des modularen Fahrzeugs mit verbundenem Modul 20 ist in Fig. 4 gezeigt. Der Anschluss einer zusätzlichen Batterie 22 kann bspw. dann notwendig werden, wenn die interne Fahrzeugbatterie 9 erschöpft ist oder die Reichweite des Fahrzeugs erhöht werden soll. Der Benutzer schließt hierzu das Modul 20 an die Schnittstelle 12 an, wonach Steuerungseinrichtung 8 und Modulsteuerung 25 in einem Kompatibilitätsmodus miteinander über den CAN-Bus 5 kommunizieren, um die Kompatibilität des Moduls 20 und genauer der Batterie 22 des Moduls 20 vor einer Verbindung dieser mit dem Leistungsbordnetz 4 zu prüfen.

Das Verfahren beim Verbinden des Moduls 20 mit der Schnittstelle 12 wird nachfolgend mit Bezug auf das Ausführungsbeispiel gemäß Fig. 5 erläutert, welches die einzelnen Schritte anhand eines Flussdiagrams darstellt.

Gemäß Schritt 50 wird zunächst das Anschlusselement 21 des Moduls 20 mit einer der Schnittstellen 12 durch einen Benutzer, wie in Fig. 4 dargestellt, verbunden. Die Schalteinheiten 24 und 28 sind in diesem Zustand zunächst geöffnet, so dass die Batterie 22 nicht mit dem Leistungsbordnetz 4 verbunden ist. Allerdings sorgt das Anschlusselement für eine Verbindung der Überwachungseinheit 27 mit dem Hilfsbordnetz 6 und dem Leistungsbordnetz 4.

Sobald die Überwachungseinheit 27 eine Spannung auf dem Hilfsbordnetz 6 bzw. dem Leistungsbordnetz 4 feststellt, gibt diese ein Signal an die Modulsteuerung 25, welche in Schritt 51 den Messfühler 26 hinsichtlich der derzeitigen Batteriespannung auf der Versorgungsleitung 23 abfragt.

Ferner ermittelt die Modulsteuerung 25 parallel aus einem internen Speicher mehrere Identifikationsparameter, welche das Modul 20 hinsichtlich Typ und Hersteller charakterisieren. In Schritt 52 sendet die Modulsteuerung ein Identifikationssignal an die Steuerungseinrichtung 8 über das CAN-Bussystem 5. Das Identifikationssignal enthält im vorliegenden Beispiel die nachfolgende Information:

| | |
|---|---|
| Hersteller-ID: | 005 |
| Typen-ID: | 125 |
| Batterie-Spannung: | 42,5 V |

Hierbei entspricht die Hersteller-ID einem bestimmten, entsprechend der ID zugeordneten Hersteller des Moduls. Die Typen-ID entspricht der Funktionalität "Energiequelle - Batterie".

Die Steuerungseinrichtung 8 empfängt das Identifikationssignal in Schritt 53 und fragt die Kompatibilitätsparameter des Fahrzeugs aus der in der Speichereinheit 11 abgelegten Datenbank ab. Im vorliegenden Beispiel umfasst die Datenbank die folgenden Parameter:

| | |
|---|---|
| Erlaubte Hersteller: | 002-008, 057, 062, 118-255 |
| Erlaubte Modultypen: | 014-042,48,87,125, 144 |
| max. Spannung Leistungsbordnetz: | 43,8 V |
| min. Spannung Leistungsbordnetz: | 30,0 V |

Die Steuerungseinrichtung 8 vergleicht in Schritt 54 zunächst die im Identifikationssignal erhaltenen Parameter mit den aus der Datenbank erhaltenen Kompatibilitätsparameter. Wie aus den vorstehenden Tabellen folgt, ist das Modul 20 grundsätzlich mit dem Fahrzeug kompatibel, so dass die Steuerungseinrichtung 8 anschließend entsprechend Schritt 55 die Messeinrichtung 10 hinsichtlich der aktuellen Spannung des Leistungsbordnetzes 4 abfragt. Andernfalls endet die Prozedur mit Schritt 58; die Batterie 22 wird dann nicht mit dem Leistungsbordnetz 4 verbunden.

Die Abfrage der Messeinrichtung in Schritt 55 ist erforderlich, da das Fahrzeug auch eine interne Fahrzeugbatterie 9 aufweist und die Spannung der Batterie 22 sich daher nur unwesentlich von der Spannung der Batterie 9 unterscheiden sollte. Im vorliegenden Beispiel beträgt die Spannung auf dem Leistungsbordnetz 4 42,5 V.

Die Steuerungseinrichtung 8 vergleicht diesen Wert mit der Batterie-Spannung aus dem Identifikationssignal in Schritt 56 und prüft, ob die Batterie-Spannung des Moduls 20 um nicht mehr als ± 0,05 V von der Spannung des Leistungsbordnetzes 4 abweicht.

Da dies im vorliegen Beispiel der Fall ist, sendet die Steuerungseinrichtung 8 in Schritt 57 ein Aktivierungssignal an die mit der Modulsteuerung 25 verbundene Schalteinheit 24, worauf die Versorgungsleitung 23 und somit die Batterie 22 mit dem Leistungsbordnetz 4 verbunden wird. Die Kompatibilitätsprüfung endet in Schritt 58.

Die erfolgreiche Verbindung wird dem Benutzer durch eine grüne Indikatorlampe (nicht gezeigt), wie bspw. einer LED angezeigt, die im Anschlusselement 21 angeordnet ist. Andernfalls zeigt eine rote Indikatorlampe (nicht gezeigt) im Anschlusselement 21, dass eine Verbindung des Moduls 20 mit dem Fahrzeug aufgrund mangelnder Kompatibilität nicht möglich ist.

Während des Betriebs bleibt die Überwachungseinheit 27 aktiv. Sollten die vorgegebenen Maximalwerte für Strom bzw. Spannung überschritten werden, sendet die Überwachungseinheit 27 ein Signal an die Modulsteuerung 25, so dass die Schalteinheit 24 die Verbindung zwischen Batterie 22 und elektrischem System 1 des Fahrzeugs trennt, um Beschädigungen zu vermeiden.

Naturgemäß ist die vorliegende Erfindung nicht auf Anwendungsfälle beschränkt, bei welchen ein Modul 20 mit dem Fahrzeug verbunden wird. Fig. 6 zeigt das zuvor mit Bezug auf die Fig. 1 und 4 erläuterte elektrische System 1 eines Elektrofahrzeugs mit zwei verbundenen Modulen 20, 20'.

Neben dem zuvor diskutierten ersten Modul 20 ist ein zweites Modul 20' an eine weitere Schnittstelle 12 angeschlossen, welches im Wesentlichen dem Modul 20 entspricht. Jedoch ist anstelle der Batterie 22 im zweiten Modul 20' ein Netzgerät 27 vorgesehen. Das Netzgerät 27 dient der Zufuhr von elektrischer Energie in das Leistungsbordnetz 4 aus einem mit dem Netzgerät 27 verbundenen elektrischen Versorgungsnetz, wie durch die gestrichelte Linie in Fig. 6 dargestellt.

Die Kompatibilitätsprüfung im Falle der Verbindung des Netzgerätemoduls 20' mit der Schnittstelle 12 entspricht der mit Bezug auf Fig. 5 erläuterten Prozedur, wobei das vom Modul 20' gesendete Identifikationssignal gegenüber dem durch das Batteriemodul 20 gesendete Signal abweicht:

| | |
|---|---|
| Hersteller-ID: | 004 |
| Typen-ID: | 048 |
| Ladespannung: | 43,5 V |
| max. Ladestrom: | 25 A |

Die Steuerungseinrichtung 8 vergleicht die Parameter des Identifikationssignals im vorliegenden Beispiel mit folgenden Kompatibilitätsparametern und verbindet nach Prüfung entsprechend auch das Netzgerätemodul 20' mit dem Leistungsbordnetz.

| | |
|---|---|
| Erlaubte Hersteller: | 002-008, 057, 062, 118-255 |
| Erlaubte Modultypen: | 014-042,48,87,125, 144 |
| max. Spannung Leistungsbordnetz: | 43,8 V |
| min. Spannung Leistungsbordnetz: | 30,0 V |
| min. Ladestrom | 1 A |
| max. Ladestrom | 50 A |

Die Steuerungseinrichtung 8 sendet, ergänzend zum Aktivierungssignal für die Schalteinheit 24 des Moduls 20' ein Deaktivierungssignal an die Motorsteueung 3, um zu verhindern, dass der Motor 14 bei verbundenem Netzgerätemodul 20' versehentlich gestartet wird.

Fig. 7 zeigt ein weiteres Ausführungsbeispiel eines elektrischen Systems 1' eines Elektrofahrzeugs mit verbundenen Batteriemodul 20. Gegenüber dem zuvor mit Bezug zu Fig. 1 diskutierten Ausführungsbeispiel weist das elektrische System 1' gemäß Fig. 7 keine interne Batterie auf, was die Flexibilität des Systems 1' weiter erhöht.

Wie gezeigt, ist das Batteriemodul 20 mit einer der Schnittstellen 12 des Fahrzeugs verbunden. Auch im vorliegenden Beispiel entspricht die Kommunikation beim Verbinden des Moduls 20 mit der Schnittstelle 12 der mit Bezug zu Fig. 5 erläuterten Prozedur, wobei die Abfrage der Messeinheit in Schritt 55 entfällt, da ohne interne Batterie naturgemäß keine Spannung auf dem Leistungsbordnetz 4 messbar ist.

Da die Überwachungseinheit 27 im vorliegenden Fall keine Spannung auf dem Hilfsbordnetz 6 detektiert, schaltet die Modulsteuerung 25 zunächst die Schalteinheit 28, so dass der Konverter 29 mit dem Hilfsbordnetz 6 verbunden wird. Dadurch wird die Steuerungseinheit 8 des Fahrzeugs mit elektrischer Energie aus der Batterie 22 versorgt, damit eine Kommunikation im Rahmen der Kompatibilitätsprüfung möglich ist. Die weitere Kommunikation entspricht der mit Bezug zu Fig. 5 erläuterten Prozedur.

Da vorliegend hinsichtlich der Verbindung des Konverters 29 mit dem Hilfsbordnetz 6 keine vorherige Prüfung auf Kompatibilität möglich ist, wird der Stromfluss in das Hilfsbordnetz 6 durch die Überwachungseinheit 27 überwacht, so dass bei Überschreiten des maximal zulässigen Stroms die Verbindung durch die Schalteinheit 28 getrennt wird, bspw. im Falle eines Kurzschlusses im elektrischen System 1' des Fahrzeugs.

Die Verbindung des Konverters 29 mit dem Hilfsbordnetz 6 kann naturgemäß auch bei dem mit Bezug zu Fig. 1 erläuterten elektrischen System 1 erforderlich sein, bspw. dann, wenn die interne Batterie 9 defekt sein sollte.

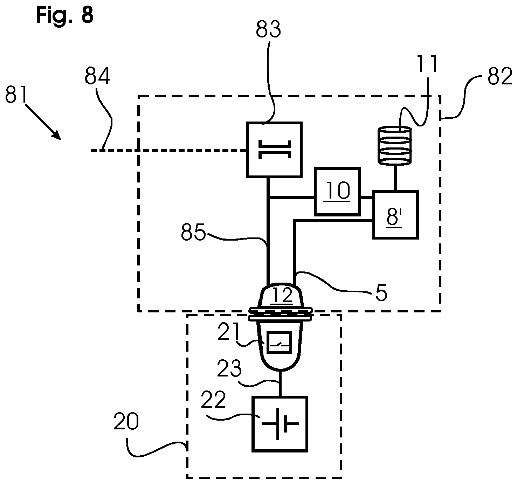

Fig. 8 zeigt ein Ausführungsbeispiel eines modularen Ladesystems mit einer Ladeeinheit 82 und einem angeschlossenen Modul 20 gemäß Fig. 2. Die gezeigte Verbindung des Batteriemoduls 20 mit der Ladeeinheit 82 kann bspw. dann erforderlich sein, wenn die Batterie 22 des Moduls 20 erschöpft ist und unabhängig vom Fahrzeug geladen werden soll oder zum Austausch geladen bereit stehen soll.

Die Ladeeinheit 82 weist ein Netzteil 83 auf, welches zum Anschluss an ein Versorgungsnetz 84, bspw. ein 220V-Stromversorgungsnetz, ausgebildet ist. Das Netzteil 83 sorgt für eine Spannungsanpassung und stellt eine Spannung von 42V DC auf einer Ladeleitung 85 bereit, die mit der Schnittstelle 12 verbunden ist. Ferner ist eine Steuerungseinrichtung 8' mit einer zugehörigen Speichereinheit 11 vorgesehen und mit der Schnittstelle 12 über einen CAN-Bus 5 verbunden, wie eingangs mit Bezug zu Fig. 1 detailliert erläutert.

Auch im vorliegenden Beispiel entspricht die Kommunikation beim Verbinden des Batteriemoduls 20 mit der Ladeeinheit 82 der mit Bezug zu Fig. 5 erläuterten Prozedur, wobei die Überwachungseinheit 27 in Schritt 50 die Spannung auf der Ladeleitung 85 erkennt und die Abfrage der Messeinheit in Schritt 55 entfällt. Die Batterie 22 des Moduls 20 wird somit nur dann mit der Ladeleitung 85 der Ladeeinheit 82 verbunden, wenn die Kompatibilität sichergestellt ist.

Sobald die Batterie 22 mit der Ladeleitung 85 verbunden ist, fragt die Steuerungseinrichtung 8' in regelmäßigen Abständen die Spannung auf der Ladeleitung 85 über die Messeinrichtung 10 ab, und ermittelt anhand der Spannung auf der Ladeleitung 85 den Ladezustand der Batterie 22. Ist die Batterie 22 vollständig geladen, sendet die Steuerungseinrichtung 8' ein Deaktivierungssignal an die mit der Modulsteuerung 25 verbundene Schalteinheit 24, um die Batterie 22 von der Ladeleitung 85 zu trennen. Eine entsprechend im Anschlusselement 21 vorgesehene LED zeigt dem Benutzer an, dass das Modul 20 vollständig geladen ist von der Ladeeinheit 82 getrennt werden kann.

Die zuvor erläuterten Ausführungsbeispiele erlauben zahlreiche Änderungen oder Ergänzungen. Beispielsweise ist es denkbar, dass
- die Steuerungseinheit 8 mit der Bedieneinheit 7 und/oder der Motorsteuerung 3 integriert ausgebildet ist,
- die Schalteinheit 24 fahrzeugseitig bzw. auf der Seite der Ladeeinheit 82 ausgebildet ist,
- die Schalteinheit 24 integriert mit der Schnittstelle 12 ausgebildet ist,
- nur eine oder mehr als zwei Schnittstellen 12 zur Verbindung mit entsprechenden Modulen 20, 20' im elektrischen System 1, 1' bzw. in der Ladeeinheit 82 angeordnet sind,
- die interne Fahrzeugbatterie 9 über ein Anschlusselement 21 mit einer der Schnittstellen 12 trennbar verbunden ist,
- das CAN-Bussystem 5 ergänzend oder alternativ zu den gezeigten elektrischen Signalleitungen optische Signalleitungen umfasst,
- die Indikatorlampen anstelle in dem Anschlusselement 21 fahrzeugseitig bzw. in der Ladeeinheit 82 angeordnet sind und/oder
- die Schalteinheit 24 zum getrennten Schalten einer Speiseleitung und einer Ladeleitung ausgebildet ist, die zwischen Modul 20 und Leistungsbordnetz 4 vorgesehen sind.

## Patentansprüche

1. Modulares Fahrzeugsystem, mit
- einem Elektrofahrzeug, insbesondere Elektroleichtfahrzeug, mit mindestens
- einem Leistungsbordnetz (4) zur Energieversorgung einer elektrischen Antriebseinheit (2),
- einer oder mehrerer mit dem Leistungsbordnetz (4) verbundener Schnittstellen (12) zur Verbindung mindestens eines Moduls (20, 20') und
- einer Steuerungseinrichtung (8), die zur Kommunikation mit dem mindestens einen Modul (20,20') ausgelegt ist, und
- mindestens einem Modul (20,20'), mit
- einem mit der Schnittstelle (12) trennbar verbindbaren Anschlusselement (21),
- einer elektrischen Anordnung zur Verbindung mit dem Leistungsbordnetz (4) und
- einer Modulsteuerung (25),
**dadurch gekennzeichnet, dass**
- die Modulsteuerung (25) des Moduls (20, 20') und die Steuerungseinrichtung (8) des Elektrofahrzeugs zur Kommunikation in einem Kompatibilitätsmodus ausgebildet sind, um die elektrische Kompatibilität des Moduls (20, 20') mit dem Leistungsbordnetz (4) zu prüfen, wobei
- die Modulsteuerung (25) ausgebildet ist, um beim Verbinden des Anschlusselements (21) mit der Schnittstelle (12) ein Identifikationssignal an die Steuerungseinrichtung (8) zu senden,
- die Steuerungseinrichtung (8) ausgebildet ist, um das Identifikationssignal zu empfangen,
- die Steuerungseinrichtung (8) ausgebildet ist, um mindestens einen elektrischen Betriebsparameter der Anordnung aus dem Identifikationssignal zu ermitteln, wobei der elektrische Betriebsparameter der Anordnung jede für einen Vergleich geeignete elektrische Größe ist, wie beispielweise Spannung, Strom, Leistung und/oder Batteriekapazität;
- die Steuerungseinrichtung (8) ausgebildet ist, um den ermittelten Betriebsparameter mit mindestens einem elektrischen Kompatibilitätsparameter des Leistungsbordnetzes (4) zu vergleichen, wobei der elektrische Kompatibilitätsparameter des Leistungsbordnetzes (4) jede für einen Vergleich geeignete elektrische Größe ist, wie beispielweise Spannung, Strom, Leistung und/oder Batteriekapazität,
und im Falle, dass der ermittelte elektrische Betriebsparameter mit dem elektrischen Kompatibilitätsparameter übereinstimmt, ein Aktivierungssignal an mindestens eine Schalteinheit (24) zu senden, um die elektrische Anordnung mit dem Leistungsbordnetz (4) zu verbinden.

2. Modulares Fahrzeugsystem nach Anspruch 1, wobei das Identifikationssignal digital ist.

3. Modulares Fahrzeugsystem nach einem der vorangehenden Ansprüche, wobei das Elektrofahrzeug zur Verbindung von zwei oder mehr Modulen (20,20') ausgebildet ist.

4. Modulares Fahrzeugsystem nach Anspruch 3, wobei die mindestens eine Schalteinheit (24) zum separaten Verbinden der zwei oder mehr Module (20,20') mit dem Leistungsbordnetz (4) ausgebildet ist.

5. Modulares Fahrzeugsystem nach einem der vorangehenden Ansprüche, wobei die Schalteinheit (24) in dem mindestens einen Modul (20,20') angeordnet ist.

6. Modulares Fahrzeugsystem nach Anspruch 5, wobei die Schalteinheit (24) integral mit dem Anschlusselement (21) ausgebildet ist.

7. Modulares Fahrzeugsystem nach einem der vorangehenden Ansprüche, wobei das Elektrofahrzeug ein vom Leistungsbordnetz (4) getrenntes Kommunikationsnetz aufweist, welches die Steuerungseinrichtung (8) mit der mindestens einen Schnittstelle (12) verbindet.

8. Modulares Fahrzeugsystem nach Anspruch 7, wobei das Anschlusselement (21) ausgebildet ist, um die elektrische Anordnung mit dem Leistungsbordnetz (4) und die Modulsteuerung (25) mit dem Kommunikationsnetz zu verbinden.

9. Elektrofahrzeug, insbesondere Elektroleichtfahrzeug, mit mindestens
- einem Leistungsbordnetz (4) zur Energieversorgung einer elektrischen Antriebseinheit (2),
- einer oder mehrerer mit dem Leistungsbordnetz (4) verbundener Schnittstellen (12) zur Verbindung mindestens eines Moduls (20,20') und
- einer Steuerungseinrichtung (8), die zur Kommunikation mit dem mindestens einen Modul (20,20') in einem Kompatibilitätsmodus ausgebildet ist, um die elektrische Kompatibilität des Moduls (20, 20') mit dem Leistungsbordnetz (4) zu prüfen, wobei
- die Steuerungseinrichtung (8) ferner ausgebildet ist, um
- ein Identifikationssignal von einer Modulsteuerung (25) des Moduls (20,20') zu empfangen,
- mindestens einen elektrischen Betriebsparameter des Moduls (20, 20') aus dem Identifikationssignal zu ermitteln,
- den ermittelten Betriebsparameter mit mindestens einem elektrischen Kompatibilitätsparameter des Leistungsbordnetzes (4) zu vergleichen, und im Falle, dass der ermittelte elektrische Betriebsparameter mit dem Kompatibilitätsparameter übereinstimmt, ein Aktivierungssignal an mindestens eine Schalteinheit (24) zu senden, um eine elektrische Anordnung des Moduls (20,20') mit dem Leistungsbordnetz (4) zu verbinden,
wobei der elektrische Betriebsparameter des Moduls (20, 20') und der elektrische Kompatibilitätsparameter des Leistungsbordnetzes (4) jede für einen Vergleich geeignete elektrische Größe sind, wie beispielweise Spannung, Strom, Leistung und/oder Batteriekapazität.

10. Modul zur Verbindung mit einem Elektrofahrzeug, insbesondere Elektroleichtfahrzeug, nach Anspruch 9 mit mindestens
- einem mit einer Schnittstelle (12) des Elektrofahrzeugs trennbar verbindbaren Anschlusselement (21),
- einer elektrischen Anordnung zur Verbindung mit einem Leistungsbordnetz (4) des Elektrofahrzeugs und
- einer Modulsteuerung (25), wobei
- die Modulsteuerung (25) zur Kommunikation in einem Kompatibilitätsmodus ausgebildet ist, um die elektrische Kompatibilität des Moduls (20, 20') mit dem Leistungsbordnetz (4) zu prüfen und um beim Verbinden des Anschlusselements (21) mit der Schnittstelle (12) ein Identifikationssignal an eine Steuerungseinrichtung (8) des Elektrofahrzeugs zu senden, wobei das Identifikationssignal mindestens einen elektrischen Betriebsparameter der elektrischen Anordnung aufweist,
wobei der elektrische Betriebsparameter der Anordnung jede für einen Vergleich geeignete elektrische Größe ist, wie beispielweise Spannung, Strom, Leistung und/oder Batteriekapazität.

11. Modul nach Anspruch 10 mit einer steuerbaren Schalteinheit (24), wobei die Schalteinheit (24) ausgebildet ist, um ein Aktivierungssignal der Steuerungseinrichtung (8) zu empfangen und die elektrische Anordnung mit dem Leistungsbordnetz (4) zu verbinden.

12. Verfahren zur sicheren Verbindung eines Moduls (20,20') nach Anspruch 10 mit einem Elektrofahrzeug nach Anspruch 9, wobei das Elektrofahrzeug mindestens ein Leistungsbordnetz (4) zur Energieversorgung einer elektrischen Antriebseinheit (2) und das Modul (20,20') mindestens eine elektrische Anordnung zur Verbindung mit dem Leistungsbordnetz (4) aufweist, wobei vor dem Verbinden der elektrischen Anordnung mit dem Leistungsbordnetz (4) die elektrische Kompatibilität des Moduls (20, 20') mit dem Leistungsbordnetz (4) in einem Kompatibilitätsmodus geprüft wird, wobei
- das Modul (20,20') ein Identifikationssignal an das Elektrofahrzeug sendet,
- das Elektrofahrzeug das Identifikationssignal empfängt, mindestens einen elektrischen Betriebsparameter aus dem Identifikationssignal ermittelt, den ermittelten elektrischen Betriebsparameter mit mindestens einem elektrischen Kompatibilitätsparameter vergleicht und, falls das Identifikationssignal mit dem Kompatibilitätsparameter übereinstimmt, die elektrische Anordnung mit dem Leistungsbordnetz (4) verbindet,
wobei der elektrische Betriebsparameter und der elektrische Kompatibilitätsparameter jede für einen Vergleich geeignete elektrische Größe sind, wie beispielweise Spannung, Strom, Leistung und/oder Batteriekapazität.

## Claims

1. A modular vehicle system, comprising:
- an electric vehicle, in particular a lightweight electric vehicle, comprising at least:
- one high-performance electrical system (4) for supplying energy to an electrical drive unit (2),
- one or more interfaces (12) connected to the high-performance electrical system (4) for connecting to at least one module (20, 20'), and
- a control apparatus (8) that is designed to communicate with the at least one module (20, 20'), and
- at least one module (20, 20'), comprising
- a connection element (21) that is releasably connectable to the interface (12),
- an electrical assembly for connecting to the high-performance electrical system (4), and
- a module control (25),
**characterized in that**
- the module control (25) of the module (20, 20') and the control apparatus (8) of the electric vehicle are designed to communicate in a compatibility mode in order to check the electrical compatibility of the module (20, 20') with the high-performance electrical system (4), wherein
- the module control (25) is designed to send an identification signal to the control apparatus (8) when connecting the connection element (21) to the interface (12),
- the control apparatus (8) is designed to receive the identification signal,
- the control apparatus (8) is designed to ascertain at least one electrical operating parameter of the assembly from the identification signal, wherein the electrical operating parameter of the assembly is any electrical value suitable for a comparison such as for example voltage, current, performance and/or battery capacity;
- the control apparatus (8) is designed to compare the ascertained operating parameter with at least one electrical compatibility parameter of the high-performance electrical system (4), wherein the electrical compatibility parameter of the high-performance electrical system (4) is any electrical value suitable for a comparison such as for example voltage, current, performance and/or battery capacity, and in the event that the ascertained electrical operating parameter corresponds with the electrical compatibility parameter, to send an activation signal to at least one switching unit (24) to connect the electrical assembly to the high-performance power system (4).

2. The modular vehicle system according to claim 1, wherein the identification signal is digital.

3. The modular vehicle system according to one of the preceding claims, wherein the electric vehicle is designed to connect two or more modules (20, 20').

4. The modular vehicle system according to claim 3, wherein the at least one switching unit (24) is designed for separately connecting the two or more modules (20, 20') to the high-performance electrical system (4).

5. The modular vehicle system according to one of the preceding claims, wherein the switching unit (24) is arranged in the at least one module (20, 20').

6. The modular vehicle system according to claim 5, wherein the switching unit (24) is designed integral with the connection element (21).

7. The modular vehicle system according to one of the preceding claims, wherein the electric vehicle has a communication network that is separate from the high-performance electrical system (4) and connects the control apparatus (8) to the at least one interface (12).

8. The modular vehicle system according to claim 7, wherein the connection element (21) is designed to connect the electrical assembly to the high-performance electrical system (4), and the module control (25) to the communication network.

9. An electric vehicle, in particular a lightweight electric vehicle, comprising at least:
- one high-performance electrical system (4) for supplying energy to an electrical drive unit (2),
- one or more interfaces (12) connected to the high-performance electrical system (4) for connecting to at least one module (20, 20'), and
- a control apparatus (8) that is designed to communicate with the at least one module (20, 20') in a compatibility mode in order to check the electrical compatibility of the module (20, 20') with the high-performance electrical system (4), wherein
- the control apparatus (8) is furthermore designed to
- receive an identification signal from a module control (25) of the module (20, 20'),
- to ascertain at least one electrical operating parameter of the module (20, 20') from the identification signal,
- to compare the ascertained operating parameter with at least one electrical compatibility parameter of the high-performance electrical system (4) and, in the event that the ascertained electrical operating parameter corresponds with the compatibility parameter, to send an activation signal to at least one switching unit (24) in order to connect an electrical assembly of the module (20, 20') to the high-performance electrical system (4), wherein the electrical operating parameter of the module (20, 20') and the electrical compatibility parameter of the high-performance electrical system (4) are any electrical value suitable for a comparison such as for example voltage, current, performance and/or battery capacity.

10. A module for connecting to an electric vehicle, in particular a lightweight electric vehicle according to claim 9 comprising at least:
- a connection element (21) that is releasably connectable to an interface (12) of the electric vehicle,
- an electrical assembly for connecting to a high-performance electrical system (4) of the electric vehicle, and
- a module control (25), wherein
- the module control (25) is designed to communicate in a compatibility mode in order to check the electrical compatibility of the module (20, 20') with the high-performance electrical system (4), and to send an identification signal to a control apparatus (8) of the electric vehicle when connecting the connection element (21) to the interface (12), wherein the identification signal has at least one electric operating parameter of the electric assembly,
wherein the electrical operating parameter of the assembly is any electrical value suitable for a comparison such as for example voltage, current, performance and/or battery capacity.

11. The module according to claim 10 comprising a controllable switching unit (24), wherein the unit (24) is designed to receive an activation signal from the control apparatus (8), and to connect the electric assembly to the high-performance electrical system (4).

12. A method for securely connecting a module (20, 20') according to claim 10 to an electric vehicle according to claim 9, wherein the electric vehicle has at least one high-performance electrical system (4) for supplying energy to an electric drive unit (2), and the module (20, 20') has at least one electric assembly for connecting to the high-performance electrical system (4), wherein before connecting the electrical assembly to the high-performance electrical system (4), the electrical compatibility of the module (20, 20') with the high-performance electrical system (4) is checked in a compatibility mode, wherein
- the module (20, 20') sends an identification signal to the electric vehicle,
- the electric vehicle receives the identification signal, ascertains at least one electric operating parameter from the identification signal, compares the ascertained electric operating parameter with at least one electrical compatibility parameter and, if the identification signal corresponds with the compatibility parameter, connects the electrical assembly to the high-performance electrical system (4), wherein the electrical operating parameter and the electrical compatibility parameter are any electrical value suitable for a comparison such as for example voltage, current, performance and/or battery capacity.

## Revendications

1. Système de véhicule modulaire comprenant :
- un véhicule électrique, en particulier un véhicule léger électrique, comprenant au moins
- un réseau de bord de puissance (4) destiné à l'alimentation en énergie d'une unité d'entraînement électrique (2),
- une ou plusieurs interfaces (12) raccordée(s) au réseau de bord de puissance (4) pour le raccordement d'au moins un module (20, 20') et
- un dispositif de commande (8) conçu pour communiquer avec l'au moins un module (20, 20'), et
- au moins un module (20, 20') comprenant
- un élément de connexion (21) apte à être raccordé de façon détachable à l'interface (12),
- un agencement électrique pour le raccordement au réseau de bord de puissance (4) et
- une commande de module (25),
**caractérisé en ce que**
- la commande de module (25) du module (20, 20') et le dispositif de commande (8) du véhicule électrique sont conçus pour communiquer dans un mode de compatibilité, afin de vérifier la compatibilité électrique du module (20, 20') avec le réseau de bord de puissance (4), dans lequel
- la commande de module (25) est conçue pour envoyer un signal d'identification au dispositif de commande (8) lors du raccordement de l'élément de connexion (21) à l'interface (12),
- le dispositif de commande (8) est conçu pour recevoir le signal d'identification,
- le dispositif de commande (8) est conçu pour déterminer au moins un paramètre de fonctionnement électrique de l'agencement à partir du signal d'identification, le paramètre de fonctionnement électrique de l'agencement étant toute grandeur électrique appropriée pour une comparaison, telle que par exemple la tension, le courant, la puissance et/ou la capacité de batterie ;
- le dispositif de commande (8) est conçu pour comparer le paramètre de fonctionnement déterminé avec au moins un paramètre de compatibilité électrique du réseau de bord de puissance (4), le paramètre de compatibilité électrique du réseau de bord de puissance (4) étant toute grandeur électrique appropriée pour une comparaison, telle que par exemple la tension, le courant, la puissance et/ou la capacité de batterie, et, dans le cas où le paramètre de fonctionnement électrique déterminé coïncide avec le paramètre de compatibilité électrique, pour envoyer un signal d'activation à au moins une unité de commutation (24) afin de raccorder l'agencement électrique au réseau de bord de puissance (4).

2. Système de véhicule modulaire selon la revendication 1, dans lequel le signal d'identification est numérique.

3. Système de véhicule modulaire selon l'une des revendications précédentes, dans lequel le véhicule électrique est conçu pour le raccordement de deux ou plusieurs modules (20, 20').

4. Système de véhicule modulaire selon la revendication 3, dans lequel l'au moins une unité de commutation (24) est conçue pour le raccordement distinct de deux ou plusieurs modules (20, 20') au réseau de bord de puissance (4).

5. Système de véhicule modulaire selon l'une des revendications précédentes, dans lequel l'unité de commutation (24) est agencée dans l'au moins un module (20, 20').

6. Système de véhicule modulaire selon la revendication 5, dans lequel l'unité de commutation (24) est conçue intégralement avec l'élément de connexion (21).

7. Système de véhicule modulaire selon l'une des revendications précédentes, dans lequel le véhicule électrique présente un réseau de communication séparé du réseau de bord de puissance (4), lequel raccorde le dispositif de commande (8) à l'au moins une interface (12).

8. Système de véhicule modulaire selon la revendication 7, dans lequel l'élément de connexion (21) est conçu pour raccorder l'agencement électrique au réseau de bord de puissance (4) et la commande de module (25) au réseau de communication.

9. Véhicule électrique, en particulier un véhicule léger électrique, comprenant au moins
- un réseau de bord de puissance (4) pour l'alimentation en énergie d'une unité d'entraînement électrique (2),
- une ou plusieurs interfaces (12) reliées au réseau de bord de puissance (4) pour le raccordement d'au moins un module (20, 20') et
- un dispositif de commande (8) conçu pour la communication avec l'au moins un module (20, 20') dans un mode de compatibilité, afin de vérifier la compatibilité électrique du module (20, 20') avec le réseau de bord de puissance (4), dans lequel
- le dispositif de commande (8) est en outre conçu pour
- recevoir un signal d'identification venant d'une commande de module (25) du module (20, 20'),
- déterminer au moins un paramètre de fonctionnement électrique du module (20, 20') à partir du signal d'identification,
- comparer le paramètre de fonctionnement déterminé avec au moins un paramètre de compatibilité électrique du réseau de bord de puissance (4), et, dans le cas où le paramètre de fonctionnement électrique déterminé coïncide avec le paramètre de compatibilité, envoyer un signal d'activation à au moins une unité de commutation (24), afin de raccorder un agencement électrique du module (20, 20') au réseau de bord de puissance (4), dans lequel le paramètre de fonctionnement électrique du module (20, 20') et le paramètre de compatibilité électrique du réseau de bord de puissance (4) sont toute grandeur électrique appropriée pour une comparaison, telle que par exemple la tension, le courant, la puissance et/ou la capacité de batterie.

10. Module pour le raccordement à un véhicule électrique, en particulier un véhicule léger électrique, selon la revendication 9, comprenant au moins
- un élément de connexion (21) apte à être raccordé de façon détachable à une interface (12) du véhicule électrique,
- un agencement électrique pour le raccordement à un réseau de bord de puissance (4) du véhicule électrique et
- une commande de module (25), dans lequel
- la commande de module (25) est conçue pour la communication dans un mode de compatibilité, afin de vérifier la compatibilité électrique du module (20, 20') avec le réseau de bord de puissance (4) et d'envoyer un signal d'identification à un dispositif de commande (8) du véhicule électrique lors du raccordement de l'élément de connexion (21) à l'interface (12), le signal d'identification présentant au moins un paramètre de fonctionnement électrique de l'agencement électrique,
dans lequel le paramètre de fonctionnement électrique de l'agencement est toute grandeur électrique appropriée pour une comparaison, telle que par exemple la tension, le courant, la puissance et/ou la capacité de batterie.

11. Module selon la revendication 10, comprenant une unité de commutation (24) commandable, dans lequel l'unité de commutation (24) est conçue pour recevoir un signal d'activation venant du dispositif de commande (8) et pour raccorder l'agencement électrique au réseau de bord de puissance (4).

12. Procédé pour le raccordement sécurisé d'un module (20, 20') selon la revendication 10 à un véhicule électrique selon la revendication 9, dans lequel
- le véhicule électrique présente au moins un réseau de bord de puissance (4) pour l'alimentation en énergie d'une unité d'entraînement électrique (2) et le module (20, 20') présente au moins un agencement électrique pour le raccordement au réseau de bord de puissance (4), dans lequel la compatibilité électrique du module (20, 20') avec le réseau de bord de puissance (4) dans un mode de compatibilité est vérifiée avant le raccordement de l'agencement électrique au réseau de bord de puissance (4), dans lequel
- le module (20, 20') envoie un signal d'identification au véhicule électrique,
- le véhicule électrique reçoit le signal d'identification, détermine au moins un paramètre de fonctionnement électrique à partir du signal d'identification, compare le paramètre de fonctionnement électrique déterminé avec au moins un paramètre de compatibilité électrique et, dans le cas où le signal d'identification coïncide avec le paramètre de compatibilité, raccorde l'agencement électrique au réseau de bord de puissance (4), dans lequel le paramètre de fonctionnement électrique et le paramètre de compatibilité électrique sont toute grandeur électrique appropriée pour une comparaison, telle que par exemple la tension, le courant, la puissance et/ou la capacité de batterie.
